# EUROPEAN PATENT SPECIFICATION

(11) **EP 1 835 188 B1**
(45) Date of publication and mention of the grant of the patent: **28.10.2009**
(21) Application number: 06300237.2
(22) Date of filing: 16.03.2006
(51) Int. Cl.: F16C 32/04

(54) **High temperature superconducting magnetic bearing**
Hochtemperatursupraleitendes Magnetlager
Palier magnétique supraconducteur à haute température

(43) Date of publication of application: 19.09.2007
(73) Proprietor: Nexans, 75008 Paris (FR)
(72) Inventor: Walter, Heribert, 37081 Göttingen (DE)
(74) Representative: Feray, Valérie

(56) References cited:
- WO-A-02/06688
- DE-A1- 4 436 831
- DE-A1- 19 850 421
- US-A- 4 956 571
- US-A- 5 117 139
- PATENT ABSTRACTS OF JAPAN vol. 2003, no. 11, 5 November 2003 (2003-11-05) -& JP 2003 214429 A (MITSUBISHI HEAVY IND LTD; CHUBU ELECTRIC POWER CO INC), 30 July 2003 (2003-07-30)
- PATENT ABSTRACTS OF JAPAN vol. 1996, no. 12, 26 December 1996 (1996-12-26) -& JP 08 200368 A (NIPPON SEIKO KK), 6 August 1996 (1996-08-06)

## Description

The present invention is directed to a magnetic bearing comprising a rotating element, e.g. a shaft, within a stator element with a high temperature superconductor wherein the rotating element is held in a contactless state of suspension by magnetic forces.

If a high temperature superconductor is located in the field of a permanent magnet at a temperature above its transition temperature Tc, a magnetic flux will pass therethrough. If, in this case, the superconductor is cooled to a temperature below Tc then a portion of the magnetic flux will remain frozen into the superconducting material. In the event of position change due to field changes shielding currents are induced in the superconductor by the permanent magnet which counteract the change of position. The resulting forces may be repulsive or attractive but are directed such that they counteract any deflection from the cooling position.

Using this principle non-contact making and, thus, essentially frictionless, self stabilizing magnetic bearings can be constructed.
Such bearings contain arrangements of permanent magnets as exciting system and a high temperature superconductor.

An example of such a bearing is disclosed in DE 44 36 831 C2. In general, such bearings comprise the following parts:
A first bearing part tightly attached to a shaft and being surrounded by a second, fixed positioned bearing part, wherein the second bearing part is associated with a stator, and a bearing gap is formed between the first and second bearing parts. The first bearing part contains an arrangement of a plurality of alternately polarized permanent magnets between which there are ferromagnetic elements. The second bearing part contains a superconducting structure, and a cooling apparatus for cooling the superconducting structure below Tc of the superconductor material. Here, the first bearing part is formed of a large number of permanent magnets which are in the form of annular discs and are located one after the other in the axial direction on the rotor shaft. These elements are polarized such that the polarisation alternates when seen in the axial direction of the shaft. Comparatively thin ferromagnetic intermediate elements are arranged in each case between adjacent permanent magnets. These ferromagnetic intermediate elements serves to magnetically concentrate the magnetic lines or force of adjacent permanent magnets, so that a particularly high magnetic field strength is produced on the side of each intermediate element which faces the bearing gap. This first bearing part of the rotor body with its magnet arrangement composed of permanently magnetic elements, is surrounded by the second fixed-position bearing part of the stator. This second bearing part contains a superconducting structure.

In the above arrangement since the stator element with the superconductor surrounds essentially concentrically the rotor element with the exciting system upon cooling below Tc the magnetic force generated keep the rotor element at its position in free suspension.
However, the actual position of the rotor element after cooling depends also on the own weight of the rotor element as well as the working load generally causing a deflection of the rotor element from the cooling position to the so called operation position.

To obtain stable and stiff bearing of the rotor element the strength of the magnetic forces acting between the superconductor and the exciting system should be desirably as high as possible.

Generally, depending on the distance between the superconductor and its exciting system during cooling (cooling position) the resulting force - distance characteristics are different:
If the distance is relatively large (Zero Field Cooling = ZFC) so that virtually no magnetic field acts on the superconductor during cooling in the result repulsive forces are obtained which increase progressively on approach.

If the distance is close during cooling (Maximum Field Cooling = MFC) on being moved away from each other, at first, attracting forces are obtained which increase until a maximum and, then, decrease.

Taking into account the above force-distance characteristics a stable and stiff bearing of the rotor element requires displacement from the cooling position.

In WO 02/06688 A1 a magnetic bearing in accordance with the preamble of claim 1 is disclosed with a stator element comprising a cylindrical superconductor and a rotor element in the form of a shaft with permanent magnets as exciting system being mounted coaxially to the shaft and wherein the rotor element is arranged coaxially in relation to the stator element in operation position.
In order to enable deflection from the cooling position into the operation position the cylindrical superconductor is divided into at least 2 circle segment-shaped partial shells which can be displaced with respect to each other in radial direction by a suitable driving mechanism (actuator). By movement of the partial shells the radial distance between the superconductor and the exciting system can be changed. Here, in the cooling position the partial shells are moved away from each other so that the radial distance at the cooling position is larger than in the operation position.

As set out above, cooling of the superconductor below its Tc is necessary which, for example, for the well known YBa₂Cu₃O superconductor is 70K. Thus, it is necessary that the stator with the superconductor is housed in a tightly sealed cooling device, e.g a dewar, with very good heat insulation properties. Usually, vacuum tight cryogenic chambers are used wherein the stator element with the superconductor is housed in the vacuum sealed cooling jacket and the rotor element is positioned within the interior warm bore of the cryogenic device.

However, there are several problems associated with a movable stator arrangement within a tightly sealed cooling chamber.
First of all, the driving mechanism for moving the partial superconductor shells must be able to work with high reliability even at very low temperatures. Moreover, the mechanism must be able to withstand the high temperature differences between the warm and the cold state. For example, the material of which the driving mechanism is made must have high dimensional stability even when cooled to very low temperatures, that is, the thermal expansion coefficient must be suitably low.
Due to this requirements a driving mechanism for operation at low temperatures is costly and restricted to specific materials only.
Further, such movable mechanically stressed mechanisms is inherently prone to repair. However, there is the disadvantage that in case of defect not only the stator with the high temperature superconductor material must be brought to room temperature but, further, the sealed cooling chamber must be opened and after the defect is cured the chamber must be sealed again and brought to the low temperature of Tc which renders any repair costly and troublesome.

If otherwise the driving mechanism is located outside the cooling chamber a connection between the cold interior and the warm outside is required, which is also disadvantageous.

According to the present invention the above problems are solved by a magnetic bearing as defined in claim 1 with a fixed positioned stator element and a rotor element with at least one permanent magnet with annularly arrangement for exciting the superconductor of the stator wherein the annularly arranged permanent magnet is composed of at least two segments which are movable in relation to the superconductor of the stator.

Since according to the present invention the superconductor of the stator is fixedly positioned the stator element can be easily housed within an isolated cold chamber of a cryogenic device which is tightly sealed without the need of providing a driving mechanism which must withstand the temperature differences on cooling and without the need of mechanically stressed parts which are liable to repair, so that any untimely interruption of the operation of the magnetic bearing due to defects of the driving mechanism can be avoided.

In the following the present invention is explained in further detail with reference to figures specific embodiments for a better illustration. It ls shown in
- **figure 1**: the general design of a superconducting magnetic bearing;
- **figure 2**: a diagram of the force-distance curve of a magnetic bearing according to the present invention ;
- **figure 3**: a diagram of the force-distance curve of another embodiment of the present invention;
- **figure 4**: a cross-section through a magnetic bearing according to the present invention at the operation position;
- **figure 5**: a cross section through the embodiment according to figure 4 in the cooling position;
- **figure 6**: a cross-section being an enlarged quarter segment of the embodiment of figures 4 and 5; and
- **figures 7a, b**: a cross-section through a rotor element of a magnetic bearing of the present invention.

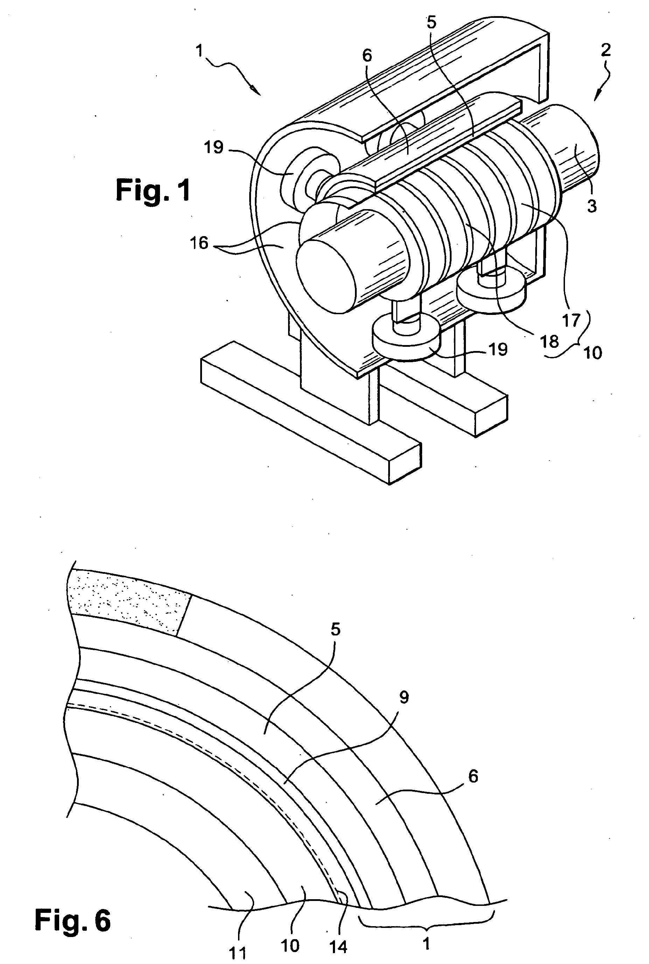

**Figure 1** shows the general design of a magnetic bearing wherein the housing of the cooling device 16 is partially removed.
The magnetic bearing has an overall cylindrical shape. The stator element 1 is composed of a cylindrically shaped superconductor 5 and a thermally conductive member 6 which is mounted on the outer surface of the superconductor 5. Supports 19 are provided for supporting the part with the superconductor 5 toward the interior of the wall of the cooling device.

Here, the rotor element 2 has a horizontal shaft 3 surrounded by an exciting system 10 with an arrangement of alternating permanent magnets 17 and flux collection poles 18. The stator element 1 is housed within the jacket of the cooling device 16 and the rotor element 2 within the interior warm bore of the cooling device 16 which is at room temperature.

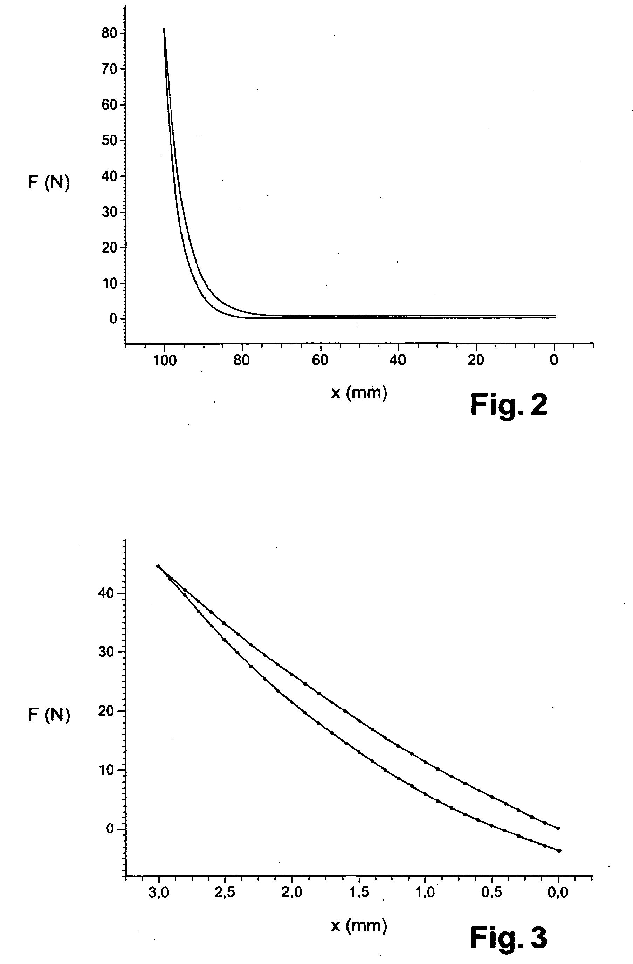

For illustration of the dependence of the strength of the magnetic force on the cooling distance between a superconductor component and its exciting system in **figures 2 and 3** the shape of the force-distance curve for two different systems is shown. In the diagrams the x-coordinate indicates the distance between the superconductor component and its exciting system with point zero being the position of the permanent magnet on cooling and the y-coordinate indicates the magnetic force generated on approaching.

For measurement permanent magnets made of iron-neodymium-boron (FeNdB) were used provided with a load cell.

The curve in figure 2 shows the course of the force on zero field cooling with the force increasing exponentially on approaching of the exciting systems, i.e permanent magnet, to the superconductor.

In figure 3 the course of the curve more closely reflects the actual situation in a real magneting bearing which, in this case, has a bearing gap of 3 mm. That is, at point zero the distance between the superconductor and the permanent magnet is actually 6 mm, and at point 3 there remains a distance corresponding to the width of the bearing gap, that is 3 mm.

In figure 2 and 3 the upper curve reflects the course of the force on approaching and the lower curve on moving away. The difference is caused by the hysteresis of the magnets.

The shape of these curves clearly shows that for obtaining a maximal strength of the magnetic force the cooling position should be sufficiently spaced away from the operation position and, further, that in the operation position the distance between the superconductor and the exciting system should be as small as possible.

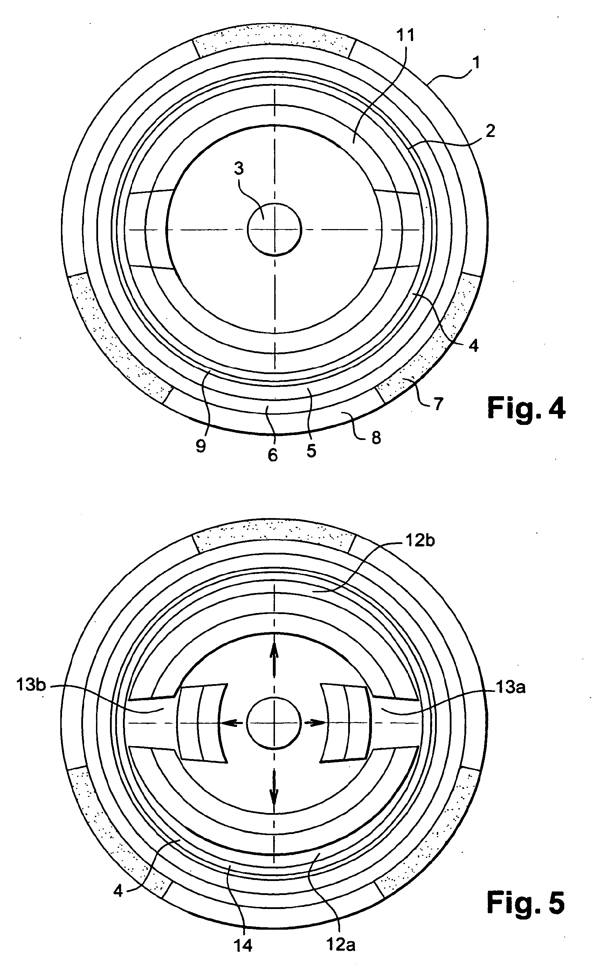

**Figures 4 and 5** show a cross section through an embodiment of an magnetic bearing according to the present invention in its operation position (figure 4) and in its cooling position (figure 5).
In the following with reference to figure 4 and 5 the design principles of a magnetic bearing according to the present invention are illustrated in more detail.

The magnetic bearing shown in figure 4 has in principle a hollow cylindrical overall shape and comprises a stator element 1 which coaxially surrounds a rotor element 2. The rotor element 2 comprises a rotating element 3 - here a shaft of a machine of non magnetic material - which is positioned within a also hollow cylindrical exciting system.
In the specific embodiment shown in the figures, the stator element 1 is composed of a cylindrically shaped superconductor 5. On the outer surface of the superconductor 5 a thermally conductive member 6 is mounted, which is supported toward the wall of the cooling device by spacers 7 with free spaces 8 between the spacers 7.

The thermally conductive member 6 serves to lead away heat from the superconductor 5 and, thus, is preferably made of a thermally highly conductive material such as copper.

An enlarged depiction of a quarter segment is shown in **figure 6****.**

The stator element 1 is housed within the jacket of a cooling device such as a dewar, the wall thereof being indicated by the black line surrounding the stator element 1 along its outer and inner circumference.

Preferably on the inner surface of the superconductor 5 a layer 9 of thermally insulating material can be provided for shielding the warm interior of the cooling device from the cooled jacket with the stator element 1. Suitable insulating materials are generally known in the art.

Cooling of the stator element 1 can be conducted by a suitable refrigerating machine.
For example the refrigerating machine can be connected with the thermally conductive member 6 for indirect cooling of the superconductors. The refrigeration machine is not shown but is as such known. For example, cryogenic coolers can be used.

For improving thermal insulation the outer surface of the member 6 can be covered with a further layer of insulating material (not shown).

The superconductor 5 can be composed of any high temperature superconductor material known to be suitable for bearing applications. An example of one class of suited superconductor material are the ceramic oxide high temperature superconductors.
Typical examples comprise ceramic oxide superconductors based on Y-Ae-Cu-O, (Y, Re)-Ae-Cu-O, Bi-Ae-Cu-O, (Bi, Pb)-Ae-Cu-O and (TI, Pb)-(Ae, Y)-Cu-O. in the above formula Ae means at least one alkaline earth element, particularly, Ba, Ca and Sr.
Re means at least one rare earth element, in particular, La, Lu, Sc, Sm, Nd or Yb.

Especially suitable superconductors are those known by the reference YBCO-123 and YBCO-211, wherein the numerical combinations 123 and 211 stand for the stoichiometric ratios of the elements Y, Ba and Cu. As well as those known by the reference BSCCO-2212, BSCCO-2223, wherein the numerical combinations 2212 and 2223 stand for the stoichiometric ratios of the elements Bi, Sr, Ca and Cu, in particular those, wherein part of Bi is substituted by Pb.

Particularly preferred are superconductors produced using a molten casting method, in particular, a centrifugal casting method as disclosed, for example, in DE-A-3 830 092, EP-A-0 451 532, EP-A-0 462 409 and EP-A-0 477 493, to which reference is expressly made.

The cylindrically shaped superconductor 5 can be made of a single piece or can be composed of a plurality of segments attached together to form the circular body.
In case of segments the segments preferably have a trapezoidal shape. Preferably each segment has the same dimensions.

The spacers 7 serve to stabilize the stator arrangement within the jacket of cooling device in a fixed position.
The number and shape of the spacers 7 is not particularly critical as long as a stable fixed position of the stator arrangement is achieved. The spacers 7 should be composed of poorly thermally conductive material such as CFRP (carbon fibre reinforced plastic) for avoiding heat introduction.
For providing effective thermal insulation the free space 8 between the spacers 7 is preferably evacuated. Further it is also possible to fill the free space 8 at least partially with at least one insulation means Any insulation means known can be applied suitable for this purpose.

Examples for suitable insulation materials are insulation foam, super insulation, insulating flakes or glass fibres.

The design and materials for exciting systems 10 for cylindrical magnetic bearings and as suitable for the present invention are generally known. The exciting system 10 can comprise a plurality of permanent magnets which are separated from each other by elements made of ferromagnetic material such as iron.
Suitable permanent magnetic materials are for example neodymium-iron-boron (NdFeB) or samarium-cobalt-alloy (SmCo).

The permanent magnets as well as the intermediate elements can have the shape of annular discs and are arranged one behind the other on a cylindrical support body 11 surrounding the shaft 3.

The cylindrical support body 11 is preferably made of a non magnetic material such as steel.
Preferably in axial direction the first and last member of the stack composed of permanent magnets and intermediate members is an intermediate member.

As shown in figure 5 the arrangement of exciting system 10 and support body 11 is divided into segments which can be moved in relation to each other in radial direction.
The segments can have a mirror-image symmetry. That is, as shown in figure 5 each segment is opposed by a mirror-imaged counterpart.

In the embodiment of figure 5 there are two large and two small segments 12a, b; 13a, b which can be moved in relation to each other in radial direction. For bringing the arrangement into the cooling position the two small segments 13a, b are shifted toward the shaft 3 until a position inside a free space between the shaft 3 and the support body 11, that is the two small segments 13a, b are brought into a position which allows the two large segments 12a, b to be shifted towards each other. Thus, the distance between the superconductor 5 and the exciting system 10 can be changed allowing activation of the magnetic force.

According to an alternative the exciting system can be divided into three magnets, which can have same or different size.

As already referred to above the operation position of the shaft depends not only on the magnetic forces but also on the own weight of the shaft and the working load.
For adjusting the desired operation position of the shaft 3 the radial distances of the segments can be selected accordingly. That is, different radial distances can be selected for the segments in the cooling position.

Generally, the number, size and shape of the segments are selected according to need in consideration of the overall construction of the respective magnetic bearing. For example, it should be taken into account that the distance between the superconductor and the exciting system should be as long as possible in the cooling position and that an optimal stiffness is obtained.

Otherwise, since the distance between the superconductor 5 and the exciting system 10 should be as small as possible in the operation position preferably the bearing gap 4 should be as small as possible.

Further, one or more of the segments can be stationary positioned with one or more others being movable.
Generally the specific design of the exciting system can vary depending on the demands of the concrete application and in view of the desired bearing force and stiffness of the system.

For moving the segments the exciting system can be connected to a commen actuator There is no particular restriction with respect to the kind of actuator.

For radial movement of the segments the exciting system can be, for example, constructed in accordance to the principles of a lathe chuck or a clamping chuck. Any other suitable construction can be also used.

Preferably, the outer limit of the moving path of the segments composing the exciting system, is defined by a tube 14 of poorly thermally conductive material such as CFRP
By the tube 14, simultaneously, the overall assembly of the magnetic bearing of the present invention is mechanically stabilized, which is particularly advantageous in case of high revolution speeds.

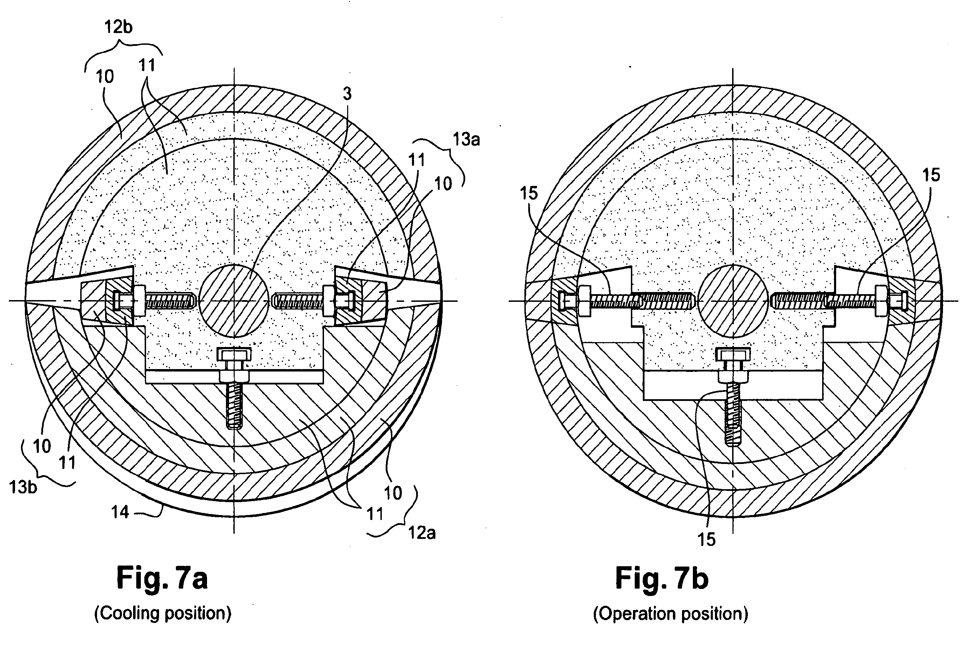

A specific example for a construction of a movable exciting system of the present invention is shown in figures 7a and b with figure 7a showing the system in the cooling position and figure 7b in the operation position.

According to this example the upper large segment 12b is stationary and fixed to the rotating element 3, the bottom large segment 12a and the right and left small segments 13a and 13b, respectively, are designed to be movable in radial direction toward the rotating element 3.

Figure 7a shows the position of each segment in the cooling position.
The upper large segment 12b with exciting system 10 and support body 11 is fastened to the rotating element 3. The upper large segment 12b is stationary, that means it does not take part in the movement of the segments of the exciting system 10 toward each other for activation.

The bottom large segment 12a is movable in radial direction relative to the upper large segment 12b.

As the bottom large segment 12a the right and left small segments 13a and 13b, respectively, are movable in radial direction toward the rotating element 3

The upper and bottom large segments 12a, b have a mating design allowing moving of the bottom large segment 12a toward the upper large segment 12b and leaving sufficiently dimensioned recesses for reception of the small segments 13a, b.

In this specific example movement of the movable segments 12a and 13a, b is done by suitable adjustment means 15 e.g. screws such as clamping bolts or adjustment screws wherein on adjusting the screw the respective segment is moved. Each movable segment 12a, 13a, b is connected to the stationary upper large segment 12b via such a screw, one segment comprising a recess for reception of the screw head and the respective counterpart a recess with a thread such as tapped hole for allowing screwing - in the threaded portion of the respective screw.
In the embodiment of figure 7 the head of the screws for moving the small segments 13a, 13b is positioned within an appropriate recess in the small segments and the respective thread within the support body 11 of the stationary upper large segment 12b; and the head of the screw for moving the bottom large segment 12a is positioned within an appropriate recess in the upper large segment 12b and the corresponding thread within the bottom large segment 12a.

For fixation of the screw head a nut or other suitable means can be provided.
The segments 12a, 13a, b are movable by turning the screws 15 either by hand or by an actuator.

For activation the movable segments 12a, 13a, b are transversed toward the operation position shown in figure 7b with the exciting system 10 forming a circle.

For improving the stabilisation of the overall construction, preferably, segments 12a, b and 13a, b are pressed against reinforcing tube 14 and, further, by clamping the small segments 13a, b between the large segments 12a, b compressive stress can be generated for further stabilisation.

The above example for movement of the segments of the exciting system 11 is only for illustrative purposes. There is no restriction and any other suitable means for moving the segments can be used for the present invention.

Moreover, different segmentation of the exciting system 10 (inclusive support member 11) as well as different movable segments can be chosen.

By the magnetic bearing of the present invention with the exciting system being within the non insulated warm bore of a cryogenic device rotating sealings are avoided. Further high insulating vacuum and long term sealing of the cryogenic device as well as easy change of bearing and rotor in case of defects are possible. Further, with the present invention a frictional connection of the exciting system on the shaft is possible, so that it is not necessary to provide a co-rotating damping.

### Reference list

- 1: stator element
- 2: rotor element
- 3: rotating element
- 4: bearing gap
- 5: superconductor
- 6: thermally conductive member
- 7: spacer
- 8: free space
- 9: insulating layer

- 10: exciting system
- 11: support body
- 12a: large segment (bottom)
- 12b: large segment (upper)
- 13a: small segment (right)
- 13b: small segment (left)
- 14: tube
- 15: adjustment means
- 16: cooling device
- 17: permanent magnets
- 18: flux collection poles
- 19: support

## Claims

1. A magnetic bearing for holding a rotating element (3) in a floating condition comprising a stator element (1) and a rotor element (2),
wherein the stator element (1) surrounds the rotor element (2) and comprises a superconductor (5),
wherein within the rotor element (2) around the rotating element (3) an exciting system (10) of permanent magnets is annularly arranged, and
wherein adjustment means (15) are provided to change the distance between the superconductor and the exciting system, **characterised in that**
the superconductor is a fixed position superconductor (5),
the annularly arranged exciting system (10) is divided along its circumference into a plurality of segments (12a, b; 13a, b) with one or more segments (12a, b; 13a, b) being movable in relation to each other, and the adjustment means (15) are provided for moving the movable segments (12a, b; 13a, b) of the exciting system (10).

2. Magnetic bearing according to claim 1,
wherein the segments (12a, b; 13a, b) are arranged in a mirror-imaged symmetry to each other.

3. Magnetic bearing according to claim 1 or 2,
wherein the segments (12a, b; 13a, b) are movable in radial direction.

4. Magnetic bearing according to any of the preceding claims,
wherein the exciting system (10) is attached to the shaft (3) in frictional connection.

5. Magnetic bearing according to any of the preceding claims,
wherein a tube 14 is provided which surrounds the exciting system (10) and defines the limit of the moving path of the one or more movable segments (12a, b; 13a, b).

6. Magnetic bearing according to any of the preceding claims
wherein the adjustment means 15 are selected from a group consisting of clamping bolts and adjustment screws.

7. Magnetic bearing according to any of the preceding claims,
wherein at least one segment (12b) is stationary and the other segments (12a, 13a, b) are movable in radial direction relative to the rotating element (3) by the adjustment means (15).

## Patentansprüche

1. Magnetlager zum Halten eines Drehelements (3) in einem schwebenden Zustand, umfassend ein Ständerelement (1) und ein Läuferelement (2),
wobei das Ständerelement (1) das Läuferelement (2) umgibt und einen Supraleiter (5) umfasst,
wobei im Innern des Läuferelements (2), um das Drehelement (3) herum, ein Erregungssystem (10) aus Dauermagneten ringförmig angeordnet ist, und
wobei Einstellmittel (15) bereitgestellt werden, um den Abstand zwischen dem Supraleiter und dem Erregungssystem zu ändern,
**dadurch gekennzeichnet, dass**
der Supraleiter ein Supraleiter in fester Position (5') ist,
das ringförmig angeordnete Erregungssystem (10) an seinem Umfang herum in eine Vielzahl von Segmenten (12a, b; 13a, b) unterteilt ist, wobei ein oder mehrere Segmente (12a, b; 13a, b) im Verhältnis zueinander beweglich sind, und
die Einstellmittel (15) bereitgestellt werden, um die beweglichen Segmente (12a, b; 13a, b) des Erregungssystem (10) zu bewegen.

2. Magnetlager nach Anspruch 1, wobei die Segmente (12a, b; 13, b) spiegelsymmetrisch zueinander angeordnet sind.

3. Magnetlager nach Anspruch 1 oder 2, wobei die Segmente (12a, b; 13a, b) in Radialrichtung bewegbar sind.

4. Magnetlager nach einem der vorhergehenden Ansprüche, wobei das Erregungssystem (10) an der Welle (3) reibschlüssig befestigt ist.

5. Magnetlager nach einem der vorhergehenden Ansprüche, wobei eine Röhre (14) bereitgestellt wird, die das Erregungssystem (10) umgibt und die Grenze der Bewegungsstrecke des einen bewegbaren Segments bzw. der mehreren bewegbaren Segmente (12a, b; 13a, b) definiert.

6. Magnetlager nach einem der vorhergehenden Ansprüche, wobei die Einstellmittel (15) aus einer Gruppe gewählt werden, die aus Klemmbolzen und Einstellschrauben besteht.

7. Magnetlager nach einem der vorhergehenden Ansprüche, wobei mindestens ein Segment (12b) feststeht und die anderen Segmente (12a, 13a, b) in Radialrichtung im Verhältnis zu dem Drehelement (3) durch die Einstellmittel (15) bewegbar sind.

## Revendications

1. Palier magnétique pour maintenir un élément tournant (3) dans un état flottant, comprenant un élément de stator (1) et un élément de rotor (2),
dans lequel l'élément de stator (1) entoure l'élément de rotor (2) et comprend un supraconducteur (5),
dans lequel, à l'intérieur de l'élément de rotor (2), autour de l'élément tournant (3), un système d'excitation (10) composé d'aimants permanents est agencé en anneau, et
dans lequel des moyens de réglage (15) sont fournis pour changer la distance entre le supraconducteur et le système d'excitation,
**caractérisé en ce que**
le supraconducteur est un supraconducteur à position fixe (5'),
le système d'excitation (10) agencé en anneau est divisé suivant sa circonférence en une pluralité de segments (12a, b ; 13a, b), un ou plusieurs segments (12a, b ; 13a, b) étant mobiles les uns par rapport aux autres, et
les moyens de réglage (15) sont fournis pour déplacer les segments mobiles (12a, b; 13a, b) du système d'excitation (10).

2. Palier magnétique selon la revendication 1, dans lequel les segments (12a, b ; 13, b) sont agencés en symétrie spéculaire les uns par rapport aux autres.

3. Palier magnétique selon la revendication 1 ou 2, dans lequel les segments (12a, b ; 13a, b) sont mobiles dans la direction radiale.

4. Palier magnétique selon l'une quelconque des revendications précédentes, dans lequel le système d'excitation (10) est attaché à l'arbre (3) par friction.

5. Palier magnétique selon l'une quelconque des revendications précédentes, dans lequel un tube (14) est fourni qui entoure le système d'excitation (10) et définit la limite du trajet de déplacement dudit un ou des plusieurs segments mobiles (12a, b ; 13a, b).

6. Palier magnétique selon l'une quelconque des revendications précédentes, dans lequel les moyens de réglage (15) sont sélectionnés dans un groupe composé de boulons de serrage et de vis de réglage.

7. Palier magnétique selon l'une quelconque des revendications précédentes, dans lequel au moins un segment (12b) est stationnaire et les autres segments (12a, 13a, b) sont mobiles dans une direction radiale par rapport à l'élément tournant (3) par les moyens de réglage (15).
